# EUROPEAN PATENT APPLICATION

(11) **EP 4 064 504 A1**
(43) Date of publication of application: **28.09.2022**
(21) Application number: 20908783.2
(22) Date of filing: 28.12.2020
(51) Int. Cl.: H02J 7/00

(54) **CHARGING CIRCUIT, CHARGING CHIP, AND ELECTRONIC DEVICE**

(30) Priority: 31.12.2019 CN 201911418314; 07.08.2020 CN 202010788025
(71) Applicant: Huawei Technologies Co., Ltd., Shenzhen, Guangdong 518129 (CN)
(72) Inventor: YU, Wenchao, Shenzhen, Guangdong 518129 (CN); ZHENG, Zhiyong, Shenzhen, Guangdong 518129 (CN); WEN, Chong, Shenzhen, Guangdong 518129 (CN); LI, Honghai, Shenzhen, Guangdong 518129 (CN)
(74) Representative: Pfenning, Meinig & Partner mbB
(86) International application number: PCT/CN2020/140338
(87) International publication number: WO 2021/136204

(57) **Abstract**

A charging circuit configured to charge a battery in an electronic device and a related product thereof are provided. The charging circuit includes a first charging path (10) and a second charging path (20). The first charging path (10) and the second charging path (20) are connected in parallel, and the first charging path (10) and the second charging path (20) are used to receive a charging signal. The first charging path (10) includes a first conversion circuit (101), and the first conversion circuit (101) is configured to convert the charging signal on the first charging path (10). The second charging path (20) includes a second conversion circuit (201), and the second conversion circuit (201) is configured to convert the charging signal on the second charging path (20). The first charging path (10) is connected to a first end of a battery (30), and the second charging path (20) is connected to a second end of the battery (30). The first end of the battery (30) is different from the second end of the battery (30). In this way, the battery (30) can be charged with a higher current.

## Description

This application claims priority to Chinese Patent Application No. 201911418314.2, filed with the China National Intellectual Property Administration on December 31, 2019 and entitled "CHARGING CIRCUIT, CHARGING CHIP, AND ELECTRONIC DEVICE", and priority to Chinese Patent Application No. 202010788025.8, filed with the China National Intellectual Property Administration on August 7, 2020 and entitled "CHARGING CIRCUIT, CHARGING CHIP, AND ELECTRONIC DEVICE", which are incorporated herein by reference in their entireties.

### TECHNICAL FIELD

This application relates to the field of charging technologies, and in particular, to a charging circuit, a charging chip, and an electronic device.

### BACKGROUND

In a charging process of an electronic device, for example, a mobile phone, a very important factor that affects a charging speed is magnitude of a charging current, and a higher charging current can bring a higher charging speed. However, in consideration of safety, charging heat consumption, and the like, currently, it is stipulated in the industry that a maximum output current of an internal component of an electronic device cannot exceed 8 A. In other words, a charging current of 8 A has reached a bottleneck. In this case, how to overcome the charging bottleneck of 8 A to increase the charging speed without violating the stipulation is an urgent problem to be resolved currently.

### SUMMARY

Embodiments of this application provide a charging circuit, a charging chip, and an electronic device, to charge a battery of the electronic device with a current greater than 8 A on a premise that an output current of an internal component of the electronic device does not exceed 8 A, so as to increase a charging speed.

According to a first aspect, an embodiment of this application provides a charging circuit. The charging circuit may be configured to charge a battery in an electronic device. The circuit includes a first charging path and a second charging path. The first charging path and the second charging path are connected in parallel, and the first charging path and the second charging path are used to receive a charging signal. The first charging path includes a first conversion circuit, and the first conversion circuit is configured to convert the charging signal on the first charging path. The second charging path includes a second conversion circuit, and the second conversion circuit is configured to convert the charging signal on the second charging path. The first charging path is connected to a first end of the battery, and the second charging path is connected to a second end of the battery. The battery is charged through the first end and the second end at the same time. Certainly, in some implementations, the charging circuit may further include more parallel charging paths. For a structure of each charging path, refer to that of the first charging path or the second charging path. However, when two charging paths are included, a quantity of parallel charging paths is smallest, and a size of the circuit is smaller, without occupying more space of the electronic device.

The first conversion circuit may be a switched-capacitor circuit whose ratio (voltage ratio for short) of an input voltage to an output voltage is 4:1 or 2:1. The second conversion circuit may be a switched-capacitor circuit whose voltage ratio is the same as that of the first conversion circuit, or may be a switched-capacitor circuit whose voltage ratio is different from that of the first conversion circuit.

The parallel charging paths are connected to the battery. In this way, when at least two of the parallel charging paths each are connected, the battery can be charged with a higher current, to improve a charging rate.

In a feasible implementation, the charging circuit may further include a third conversion circuit. A first end of the third conversion circuit is connected to a charging interface, and is configured to receive a charging input signal, and a second end of the third conversion circuit is connected to the first charging path and the second charging path.

The third conversion circuit may be, for example, a switched-capacitor circuit whose voltage ratio is 4:1 or 2:1. Certainly, the third conversion circuit may be alternatively a switched-capacitor circuit having another voltage ratio.

The third conversion circuit boosts a current that is output by the charging interface, and reduces a voltage that is output by the charging interface, so that a current and a voltage that are input to the first charging path and/or the second charging path can reach preset magnitude. In this way, the first charging path and/or the second charging path can output a current and a voltage that have target magnitude. In addition, the circuit structure in this embodiment may match a layout design of another component in the electronic device, so that a component layout in the electronic device is more compact and appropriate.

In a feasible implementation, the charging circuit may further include a rheostat. The rheostat is connected in series between the third conversion circuit and the charging interface, and the rheostat is further configured to receive a first control signal of the third conversion circuit. The first control signal is used to adjust impedance of the rheostat. In this implementation, the third conversion circuit monitors magnitude of an input or output current of the third conversion circuit, and adjusts the impedance of the rheostat based on a monitoring result, to flexibly adjust and precisely control a charging current of the battery, so as to meet current requirements at different charging stages.

In a feasible implementation, the first charging path further includes a fourth conversion circuit, and the fourth conversion circuit is connected in series to the first conversion circuit. The second charging path further includes a fifth conversion circuit, and the fifth conversion circuit is connected in series to the second conversion circuit. The fourth conversion circuit may be, for example, a switched-capacitor circuit whose voltage ratio is 4:1 or 2:1. The fifth conversion circuit may be a switched-capacitor circuit whose voltage ratio is the same as that of the fourth conversion circuit, or may be a switched-capacitor circuit whose voltage ratio is different from that of the fourth conversion circuit.

The fourth conversion circuit and the fifth conversion circuit boost or reduce the charging signals on the first charging path and the second charging path for a second time, to improve adjustment amplitudes of the charging signals, so as to meet a charging requirement.

In a feasible implementation, the charging circuit may further include a controller. The first charging path further includes a first switch module. The first switch module is connected in series to the first conversion circuit and the third conversion circuit, and the first switch module is connected to the controller. The controller is configured to control turning-on or turning-off of the switch module. The first switch module may be a MOS transistor or a triode relay having a switch function.

A quantity of charging paths for charging the battery can be controlled by controlling turning-on or turning-off of the first switch module, to meet requirements of the electronic device for different charging currents. In addition, because heat consumption is in direct proportion to magnitude of a current, when the battery needs to be supplied with power with a high current, the first switch module is turned on, to reduce magnitude of a current on a single charging path through current splitting, so as to reduce heat consumption of a component on the charging path.

In a feasible implementation, the charging circuit may further include a rheostat connected in series to the first charging path or the second charging path. A current on a charging path can be flexibly adjusted by controlling impedance of the rheostat, to meet current requirements at different charging stages. In addition, based on this implementation, in another feasible implementation, the second charging path may further include a second switch module. The second switch module is connected in series to the second conversion circuit and the fifth conversion circuit, and the second switch module is connected to a charging interface. The second switch module may be a MOS transistor or a triode relay having a switch function.

In a feasible implementation, a path between the first conversion circuit and the fourth conversion circuit and a path between the second conversion circuit and the fifth conversion circuit may be further connected through a connection path. In some implementations, a third switch module may be further connected in series on the connection path. A series-parallel structure in the charging circuit can be flexibly adjusted by controlling turning-on or turning-off of the third switch module. The third switch module may be a MOS transistor or a triode relay having a switch function.

In a feasible implementation, the charging interface includes a wired charging interface and/or a wireless charging interface.

According to a second aspect, an embodiment of this application provides a charging chip. The chip includes the charging circuit according to the first aspect.

According to a third aspect, an embodiment of this application provides an electronic device, including a battery and the charging chip according to the second aspect. The electronic device includes but is not limited to a mobile phone, a wearable device, and the like.

In a feasible implementation, the battery includes a cell and a battery protection board. The battery protection board covers an end surface that is provided with an electrode terminal and that is of the cell, and at least a part of the battery protection board is a flexible circuit board.

In a feasible implementation, the charging chip is disposed on a first rigid circuit board, and openings one-to-one corresponding to charging paths are disposed on the flexible circuit board.

The flexible circuit board is BTB fastened to the first rigid circuit board, and a charging terminal corresponding to the charging path penetrates through the corresponding opening and presses against the electrode terminal.

In a feasible implementation, the circuit protection board further includes a second rigid circuit board, and the battery protection board is formed by splicing the flexible circuit board and the second rigid circuit board.

It should be understood that technical solutions in the second and third aspects of this application are consistent with technical solutions in the first aspect of this application. Beneficial effects achieved by the various aspects and corresponding feasible implementations are similar. Details are not described again.

### BRIEF DESCRIPTION OF DRAWINGS

FIG. 1 is a schematic diagram of a structure of a charging circuit according to an embodiment of this application;
FIG. 2 is a schematic diagram of a structure of another charging circuit according to an embodiment of this application;
FIG. 3 is a schematic diagram of a structure of a switched-capacitor circuit according to an embodiment of this application;
FIG. 4 is a schematic diagram of a structure of still another charging circuit according to an embodiment of this application;
FIG. 5 is a schematic diagram of a structure of still another charging circuit according to an embodiment of this application;
FIG. 6 is a schematic diagram of a structure of still another charging circuit according to an embodiment of this application;
FIG. 7 is a schematic diagram of a structure of still another charging circuit according to an embodiment of this application;
FIG. 8 is a schematic diagram of a structure of still another charging circuit according to an embodiment of this application;
FIG. 9 is a schematic diagram of a structure of still another charging circuit according to an embodiment of this application;
FIG. 10 is a schematic diagram of a structure of still another charging circuit according to an embodiment of this application;
FIG. 11a and FIG. 11b are schematic diagrams of a structure of still another charging circuit according to an embodiment of this application;
FIG. 12a and FIG. 12b are schematic diagrams of a structure of still another charging circuit according to an embodiment of this application;
FIG. 13 is a schematic diagram of a structure of still another charging circuit according to an embodiment of this application;
FIG. 14 is a schematic diagram of a structure of still another charging circuit according to an embodiment of this application;
FIG. 15 is a schematic diagram of a structure of still another charging circuit according to an embodiment of this application;
FIG. 16 is a schematic diagram of a structure of an electronic device according to an embodiment of this application; and
FIG. 17 is a schematic diagram of a structure of an electronic device according to an embodiment of this application.

### DESCRIPTION OF EMBODIMENTS

The following describes embodiments of this application with reference to the accompanying drawings in embodiments of this application.

Charging path: The charging path in embodiments of this application is a series path between an input end and an output end.

Switch module: The switch module in embodiments of this application is a circuit or a component having a switch function. For example, in some embodiments, the switch module (for example, any one or more of a first switch module, a second switch module, and a third switch module) in embodiments of this application may be a MOS transistor or a triode relay having the switch function.

A charging solution provided in a related technology mainly includes the following implementation:

In a charging solution, a high-low voltage conversion chip, for example, a switched capacitor (Switched capacitor, SC for short), in a single charging path is used to reduce a voltage output by a charger, to boost a charging current, so as to charge a battery. A greatest advantage of this solution is that a charging heat loss is low. However, power of a single SC is usually quite difficult to be greater than 40 W.

Based on a requirement of a user for a higher charging current and a higher charging speed, embodiments of this application disclose a charging circuit, a charging chip, and an electronic device. In a solution provided in embodiments of this application, a concept of resolving the problem is receiving a charging signal through at least two parallel charging paths, and charging a battery through all of these charging paths. At least one conversion circuit configured to boost a current and reduce a voltage is disposed on each of these charging paths. Conversion circuits on different charging paths may be the same or different. A plurality of conversion circuits on a same charging path may be the same or different. A current or a voltage on each charging path is converted by the conversion circuit into a current or a voltage with target magnitude.

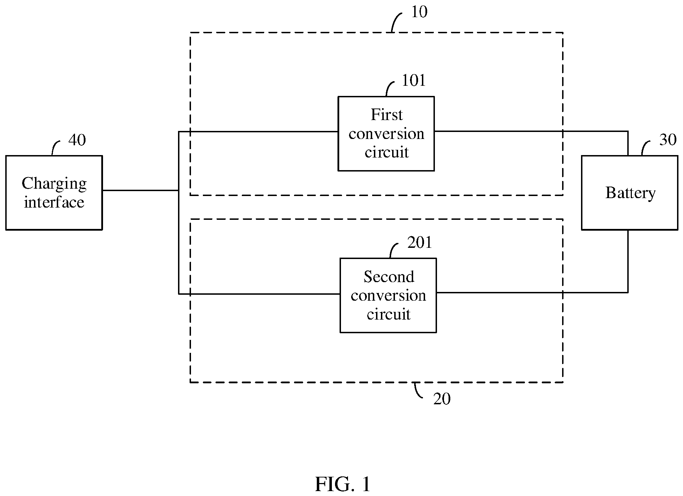

FIG. 1 is a schematic diagram of a structure of a charging circuit according to an embodiment of this application. The circuit may be configured to charge a battery in an electronic device. The electronic device may be understood as, for example, a mobile phone or another wearable device, but is not limited to the mobile phone and the wearable device. Actually, the charging circuit is applicable to all devices that carry batteries and that can provide charging support for the batteries. For example, FIG. 1 shows that the charging circuit includes two charging paths. As shown in FIG. 1, the charging circuit includes a first charging path 10 and a second charging path 20. The first charging path 10 and the second charging path 20 are connected in parallel, and the first charging path 10 and the second charging path 20 receive a charging signal from a charging interface 40, and charge a battery 30 at the same time. The first charging path 10 includes a first conversion circuit 101, and the first conversion circuit 101 is configured to convert the charging signal on the first charging path 10. The second charging path 20 includes a second conversion circuit 201, and the second conversion circuit 201 is configured to convert the charging signal on the second charging path 20. Conversion performed by the first conversion circuit 101 and/or the second conversion circuit 201 on the charging signal includes boosting a current signal or reducing a voltage signal. It should be noted herein that, although FIG. 1 shows that the first charging path 10 includes only one first conversion circuit 101, and the second charging path 20 includes only one second conversion circuit, actually, in another implementation, the first charging path 10 may include at least one first conversion circuit 101, and the second charging path 20 may include at least one second conversion circuit 201.

In this embodiment, the first conversion circuit 101 and the second conversion circuit 201 may be the same or different.

For example, in this embodiment, the first conversion circuit 101 and/or the second conversion circuit 201 may be understood as a switched-capacitor circuit whose ratio of an input voltage to an output voltage (voltage ratio for short below) is 4:1 or 2:1. However, in some implementations, the first conversion circuit 101 and/or the second conversion circuit 201 may not be necessarily limited to the switched-capacitor circuit whose voltage ratio is 4:1 or 2:1. Actually, the first conversion circuit 101 and/or the second conversion circuit 201 may alternatively be a switched-capacitor circuit having another voltage ratio, or may be another device that can reduce a voltage and boost a current.

In some implementations, different charging paths in the charging circuit may be connected to different power pins of the battery. For example, in the charging circuit shown in FIG. 1, the first charging path 10 may be disposed to be connected to a first end of the battery, and the second charging path 20 may be disposed to be connected to a second end of the battery. The first end and the second end may be two different power pins of the battery, or the first end and the second end may be a same power pin of the battery.

Parallel charging paths are connected to the battery. In this way, when at least two of the parallel charging paths each are connected, the battery can be charged with a higher current, to improve a charging rate.

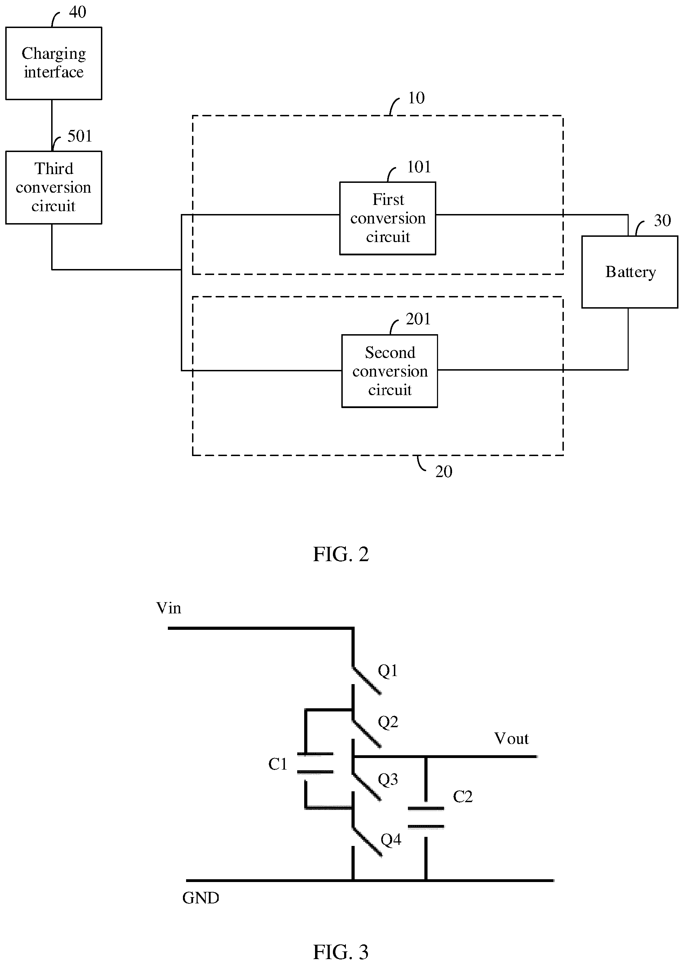

FIG. 2 is a schematic diagram of a structure of another charging circuit according to an embodiment of this application. As shown in FIG. 2, the charging circuit provided in this embodiment further includes a third conversion circuit 501. A first end of the third conversion circuit 501 is connected to the charging interface 40, and a second end of the third conversion circuit 501 is connected to the first charging path 10 and the second charging path 20. The third conversion circuit 501 is configured to: boost a current that is output by the charging interface 40, reduce a voltage that is output by the charging interface 40, and input a converted electrical signal to the first charging path 10 and/or the second charging path 20. For ease of understanding, the third conversion circuit 501 in this embodiment may be also understood as, for example, a switched-capacitor circuit.

For example, FIG. 3 is a schematic diagram of a structure of a switched-capacitor circuit according to an embodiment of this application. The switched-capacitor circuit may be used in a circuit that charges a rechargeable battery in a mobile terminal. As shown in FIG. 3, the switched-capacitor circuit includes a capacitor C1, a capacitor C2, a switch Q1, a switch Q2, a switch Q3, and a switch Q4. One end of the switch Q1 is used to receive an input voltage Vin of the switched-capacitor circuit, and the other end of the switch Q1 is separately connected to the switch Q2 and a first end of the capacitor C1. A second end of the capacitor C1 is separately connected to the switch Q3 and the switch Q4. The switch Q4 is grounded (where GND is used to represent the ground in FIG. 3). The switch Q3 and the switch Q2 are separately connected to a first end of the capacitor C2, and a second end of the capacitor C2 is grounded. A voltage between the two ends of the capacitor C2 is an output voltage Vout of the switched-capacitor circuit.

When the switch Q1 and the switch Q3 are turned on, and the switch Q2 and the switch Q4 are turned off, the capacitor C1 and the capacitor C2 are connected in series. In this case, VC1 + VC2 = Vin, where VC1 is a voltage on the capacitor C1, and VC2 is a voltage on the capacitor C2, namely, Vout.

When the switch Q1 and the switch Q3 are turned off, and the switch Q2 and the switch Q4 are turned on, the capacitor C1 and the capacitor C2 are connected in parallel. In this case, the capacitor C1 and the capacitor C2 discharge, and VC1 = VC2 = Vout. In the switched-capacitor circuit, voltages on the capacitor C1 and the capacitor C2 usually remain unchanged. Therefore, Vin = 2Vout may be learned based on VC1 + VC2 = Vin and VC1 = VC2 = Vout. In addition, in the switched-capacitor circuit, input power Pi and output power Po of the switched-capacitor circuit are equal, Pi = iin x Vin, and Po = oin x Vout, where iin is an input current of the switched-capacitor circuit, and oin is an output current of the switched-capacitor circuit. Therefore, when Vin = 2Vout, iin = 1/2oin.

Certainly, this is merely an example for description, but not the unique limitation on the switched-capacitor circuit.

In this embodiment, the third conversion circuit 501 may be the same as the first conversion circuit 101 or the second conversion circuit 201, or may be different from the first conversion circuit 101 or the second conversion circuit 201. For example, when the third conversion circuit 501 is an SC, the first conversion circuit 101 or the second conversion circuit 201 may be an SC, or may be another component that can reduce a voltage and boost a current. When being all SCs, the third conversion circuit 501, the first conversion circuit 101, and the second conversion circuit 201 may boost a current or reduce a voltage by different proportions.

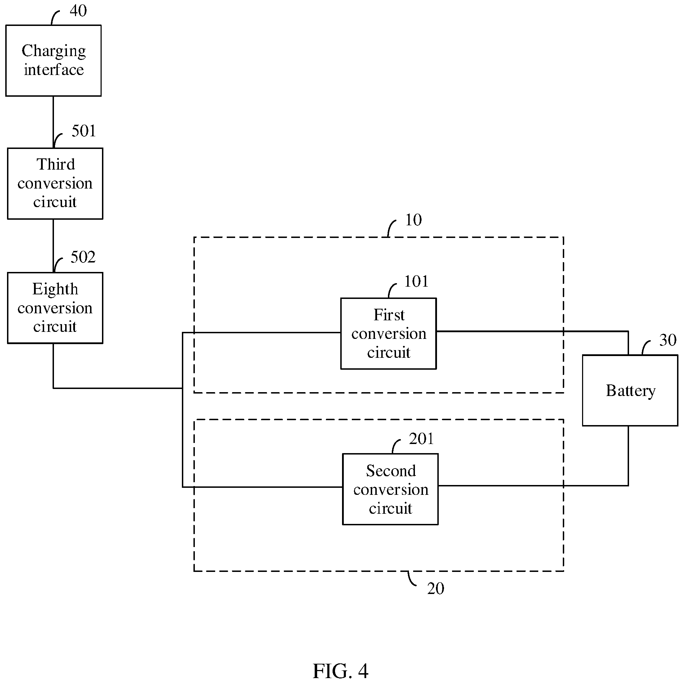

For example, FIG. 4 is a schematic diagram of a structure of still another charging circuit according to an embodiment of this application. As shown in FIG. 4, based on the structure shown in FIG. 2, the charging circuit may further include an eighth conversion circuit 502. The third conversion circuit 501 and the eighth conversion circuit 502 are connected in series. The third conversion circuit 501 is connected to the charging interface 40, and the eighth conversion circuit 502 is connected to the first charging path 10 and the second charging path 20. The third conversion circuit 501 and the eighth conversion circuit 502 may be a same conversion circuit or different conversion circuits.

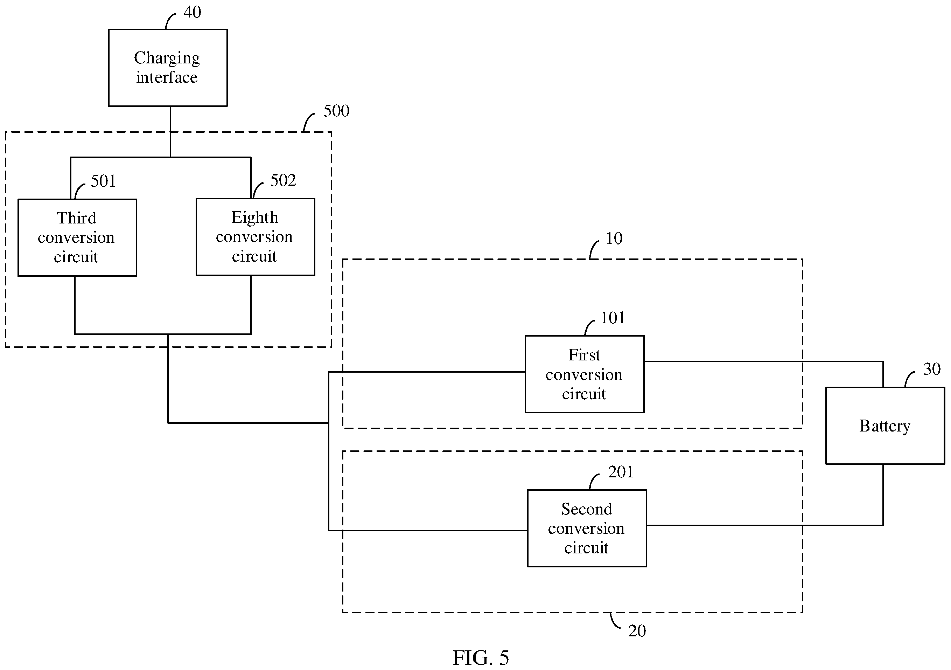

For example, FIG. 5 is a schematic diagram of a structure of still another charging circuit according to an embodiment of this application. As shown in FIG. 5, in the charging circuit shown in FIG. 5, the third conversion circuit 501 and the eighth conversion circuit 502 are connected in parallel. One end of a parallel circuit 500 formed after the third conversion circuit 501 and the eighth conversion circuit 502 are connected in parallel is connected to the charging interface 40, and the other end of the parallel circuit 500 is connected to the charging path 10 and the charging path 20.

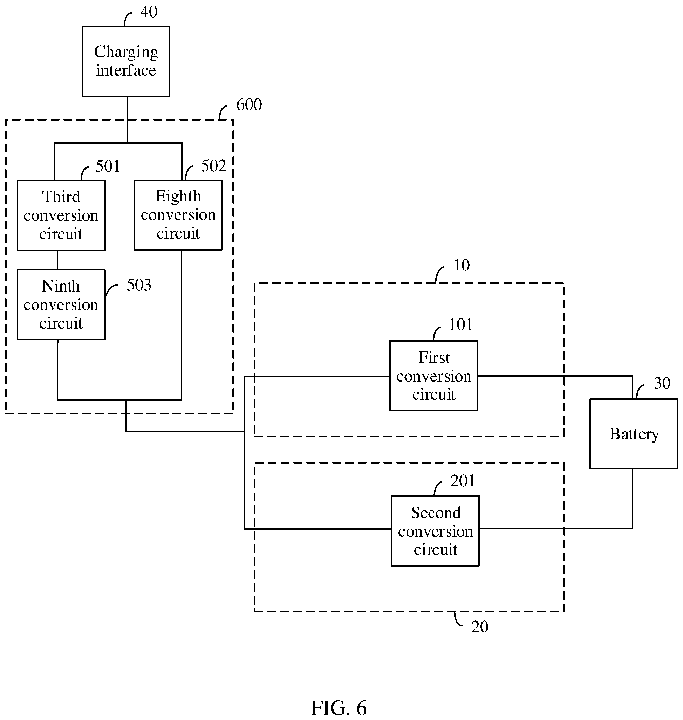

For example, in an implementation, the third conversion circuit 501 in the charging circuit may be connected in series to another conversion circuit, and then connected in parallel to the eighth conversion circuit 502. For example, FIG. 6 is a schematic diagram of a structure of still another charging circuit according to an embodiment of this application. As shown in FIG. 6, based on the structure shown in FIG. 5, the charging circuit may further include a ninth conversion circuit 503. The third conversion circuit 501 and the ninth conversion circuit 503 are connected in series, and then connected in parallel to the eighth conversion circuit 502. One end of a parallel circuit 600 is connected to the charging interface 40, and the other end of the parallel circuit 600 is connected to the charging path 10 and the charging path 20. The third conversion circuit 501, the eighth conversion circuit 502, and the ninth conversion circuit 503 may be a same conversion circuit or different conversion circuits.

Circuit structures of the first conversion circuit to the third conversion circuit, the eighth conversion circuit, and the ninth conversion circuit in this embodiment of this application may be structures of switched-capacitor circuits. For the circuit structure, refer to FIG. 3 and related descriptions. A ratio of an input voltage to an output voltage of the switched-capacitor circuit may be 4:1, 2:1, or another ratio. The ratio may be specifically adjusted based on a circuit design requirement. This is not specifically limited in this embodiment of this application.

Certainly, FIG. 4 to FIG. 6 are merely examples for describing connection structures of the third conversion circuit in the charging circuits, but not the unique limitation.

The third conversion circuit boosts the current that is output by the charging interface, and reduces the voltage that is output by the charging interface, so that a current and a voltage that are input to the first charging path and/or the second charging path can reach preset magnitude. For example, when both target output currents of the first charging path and the second charging path are I, and both the first charging path and the second charging path can quadruply amplify a current, the third conversion circuit may boost the current that is output by the charging interface, so that the currents that are input to the first charging path and the second charging path are 1/4 of I. In this way, the charging circuit can charge the battery with double I. In addition, the circuit structure in this embodiment may match a layout design of another component in the electronic device, so that a component layout in the electronic device is more compact and appropriate.

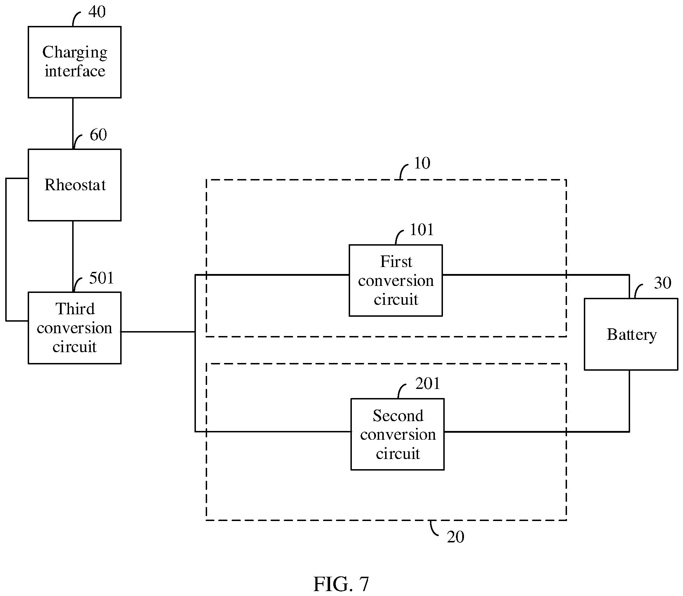

FIG. 7 is a schematic diagram of a structure of still another charging circuit according to an embodiment of this application. As shown in FIG. 7, the charging circuit in this embodiment may further include a rheostat 60. The rheostat 60 is connected in series between the third conversion circuit 501 and the charging interface 40, and a control end of the rheostat 60 is connected to the third conversion circuit 501. The third conversion circuit 501 monitors magnitude of an input or output current of the third conversion circuit 501, generates a first control signal based on a monitoring result, and adjusts impedance of the rheostat by using the first control signal.

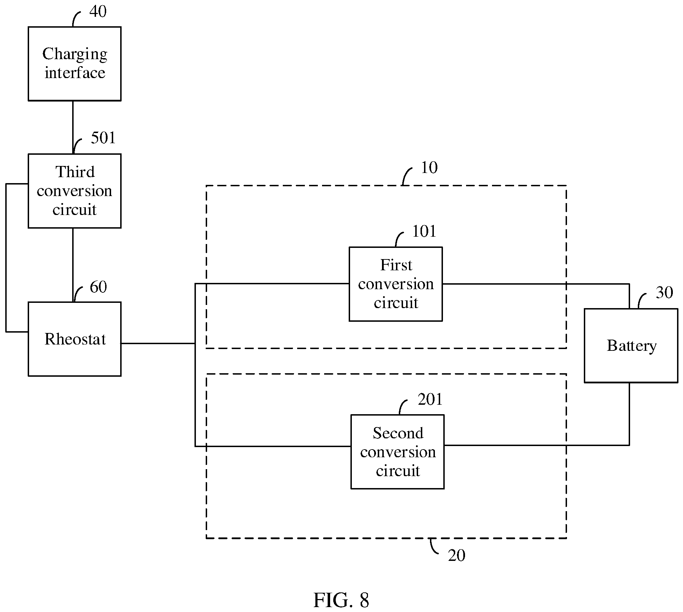

Certainly, this embodiment shows merely an example of a connection manner of the rheostat 60. Actually, the rheostat 60 may be connected in another manner. For example, FIG. 8 is a schematic diagram of a structure of still another charging circuit according to an embodiment of this application. In the charging circuit shown in FIG. 8, one end of the rheostat 60 is connected to the third conversion circuit 501, and the other end of the rheostat 60 is connected to the charging path 10 and the charging path 20. The control end of the rheostat 60 is still connected to the third conversion circuit 501, and the third conversion circuit 501 controls resistance of the rheostat 60.

In addition, in some embodiments, a quantity of rheostats may not be limited to one. For example, in some implementations, a plurality of rheostats may be connected in series between the third conversion circuit 501 and the charging interface 40, or a plurality of rheostats may be connected in parallel, and then connected in series between the third conversion circuit 501 and the charging interface 40.

The rheostat adjusts magnitude of a current flowing into a charging path, to flexibly adjust and precisely control a charging current, so as to meet current requirements at different charging stages.

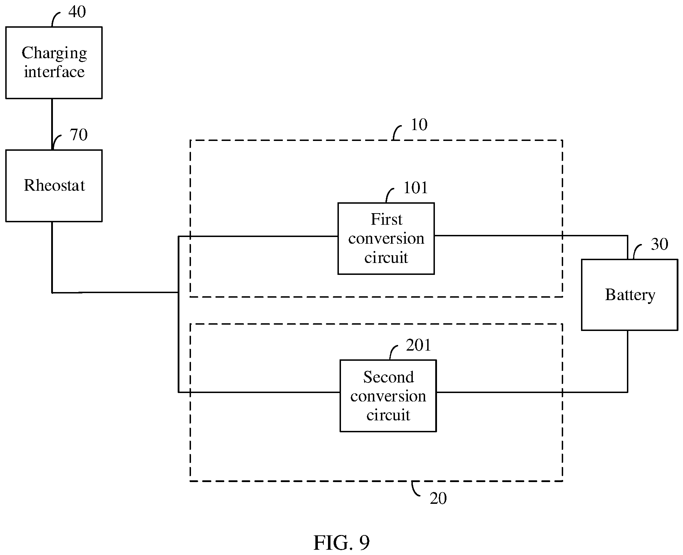

FIG. 9 is a schematic diagram of a structure of still another charging circuit according to an embodiment of this application. As shown in FIG. 9, the charging circuit in this embodiment may further include a rheostat 70. One end of the rheostat 70 is connected to the charging interface 40, and the other end of the rheostat 70 is connected to the first charging path 10 and the second charging path 20. A control end of the rheostat 70 is connected to the first conversion circuit 101 or the second conversion circuit 201. For example, the control end of the rheostat 70 is connected to the first conversion circuit 101. When the first conversion circuit 101 detects that an input current of the first conversion circuit 101 is less than a preset current, the first conversion circuit 101 controls the rheostat 70 to decrease resistance until the current flowing into the first conversion circuit 101 increases to the preset current. When the first conversion circuit 101 detects that an input current of the first conversion circuit 101 is greater than the preset current, the first conversion circuit 101 controls the rheostat 70 to increase resistance until the current flowing into the first conversion circuit 101 decreases to the preset current.

In some implementations, a quantity of rheostats 70 may not be limited to one. For example, in a feasible implementation, a plurality of rheostats may be connected in series or in parallel, and then a circuit obtained by connecting the plurality of rheostats in series or in parallel is connected to the charging interface 40 and each charging path.

The rheostat preliminarily adjusts a current flowing into each charging path, and then a conversion circuit on each charging path further processes the current on each charging path, to quickly obtain a current with target magnitude on each charging path, so as to improve current adjustment efficiency.

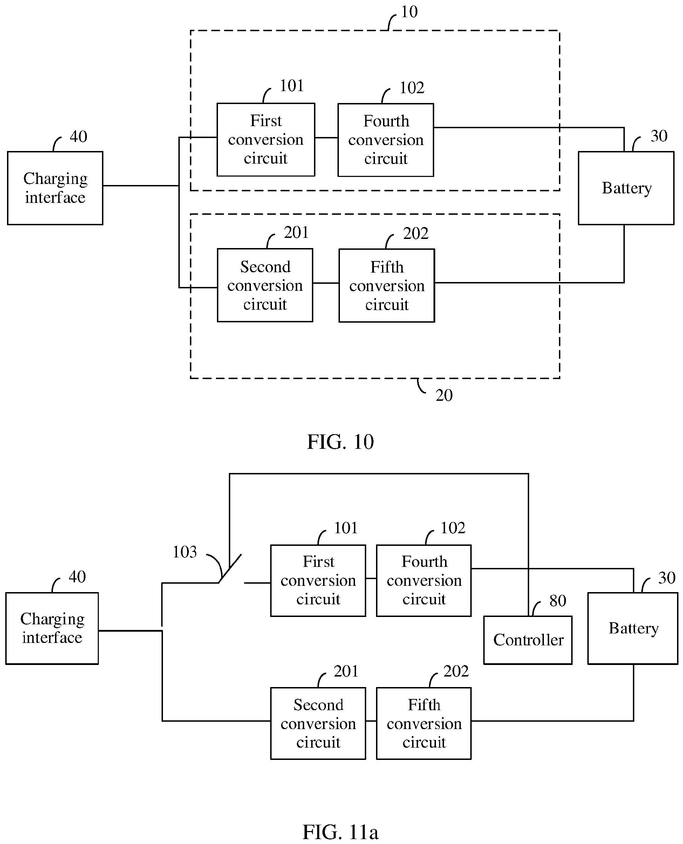

FIG. 10 is a schematic diagram of a structure of still another charging circuit according to an embodiment of this application. As shown in FIG. 10, in this embodiment, the first charging path 10 further includes a fourth conversion circuit 102, and the second charging path 20 further includes a fifth conversion circuit 202. The fourth conversion circuit 102 is connected in series to the first conversion circuit 101, and the fifth conversion circuit 202 is connected in series to the second conversion circuit 201.

The fourth conversion circuit may be, for example, a switched-capacitor circuit whose voltage ratio is 4:1 or 2:1. The fifth conversion circuit may be a switched-capacitor circuit whose voltage drop ratio is the same as that of the fourth conversion circuit, or may be a switched-capacitor circuit whose voltage drop ratio is different from that of the fourth conversion circuit. Certainly, these are merely examples for describing the fourth conversion circuit and the fifth conversion circuit, but not the unique limitation on the fourth conversion circuit and the fifth conversion circuit.

Target electrical signals can be accurately obtained on the first charging path and the second charging path by performing conversion processing twice, to improve accuracy of current adjustment on the charging paths. In addition, an electrical signal is adjusted twice, to improve an adjustment amplitude of a current, so as to meet a charging requirement.

Certainly, FIG. 10 shows merely an example structure, but not the unique structure. Actually, the structures of the first charging path and the second charging path in FIG. 10 may be also applied to any embodiment in FIG. 2 to FIG. 9.

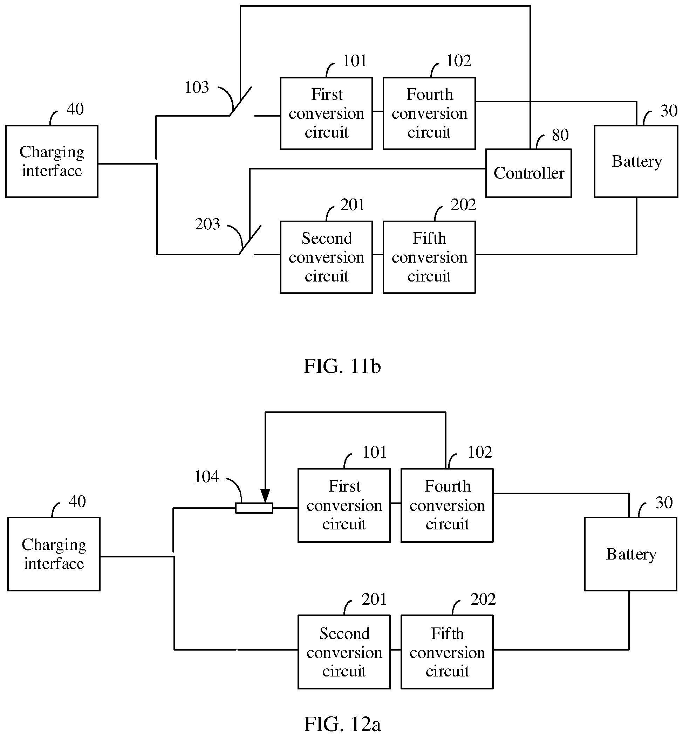

FIG. 11a and FIG. 11b are schematic diagrams of structures of still other charging circuits according to an embodiment of this application. In the charging circuit shown in FIG. 11a, the charging circuit may further include a controller 80, and the first charging path 10 further includes a first switch module 103. The first switch module 103 is connected in series to the first conversion circuit 101 and the fourth conversion circuit 102, and the first switch module 103 is connected to the controller 80. The controller 80 controls turning-on or turning-off of the first switch module 103. Based on FIG. 11a, the second charging path 20 in FIG. 11b may further include a second switch module 203. The second switch module 203 is connected in series to the second conversion circuit 201 and the fifth conversion circuit 202, and the second switch module is connected to the charging interface 40. The controller 80 is further configured to control turning-on or turning-off of the second switch module 203. When the second switch module 203 is turned off, and the first switch module 103 is turned on, the battery 30 is charged through the first charging path 10. When the second switch module 203 is turned on, and the first switch module 103 is turned off, the battery 30 is charged through the second charging path 20. When both the second switch module 203 and the first switch module 103 are turned on, the battery 30 is charged through the first charging path 10 and the second charging path 20 at the same time. In this case, a total current output by the first charging path 10 and the second charging path 20 may be greater than 8 A. In other words, in this case, the battery 30 may be charged with a current greater than 8 A.

In FIG. 11a and FIG. 11b, a position at which the first switch module 103 is connected in series on the first charging path 10 and a position at which the second switch module 203 is connected in series on the second charging path 20 are merely examples. Actually, each of the first switch module 103 and the second switch module 203 may be connected in series at any position of a charging path on which the switch module is located.

The first switch module 103 and/or the second switch module 203 may be a MOS transistor or a triode relay having a switch function.

Turning-off or turning-on of switch modules on first charging paths and second charging paths are controlled, to flexibly control quantities of connected first charging paths and connected second charging paths in the charging circuit, so as to control a quantity of charging paths for charging the battery at the same time. Especially, when there are more than two first charging paths and/or more than two second charging paths in the charging circuit, controlling the quantities of connected first charging paths and connected second charging paths helps control heat consumption on each connected charging path. For example, when the electronic device is in a high-current charging state, a current can be split by controlling a large quantity of switch modules on the first charging paths and/or the second charging paths to be turned on, to reduce magnitude of an input current on each connected charging path. Because heat consumption is in direct proportion to magnitude of a current, after the input current on each connected charging path is reduced, heat consumption of each component on the connected charging path is correspondingly reduced to some extent, to further reduce the heat consumption of each component on the charging path during high-current charging.

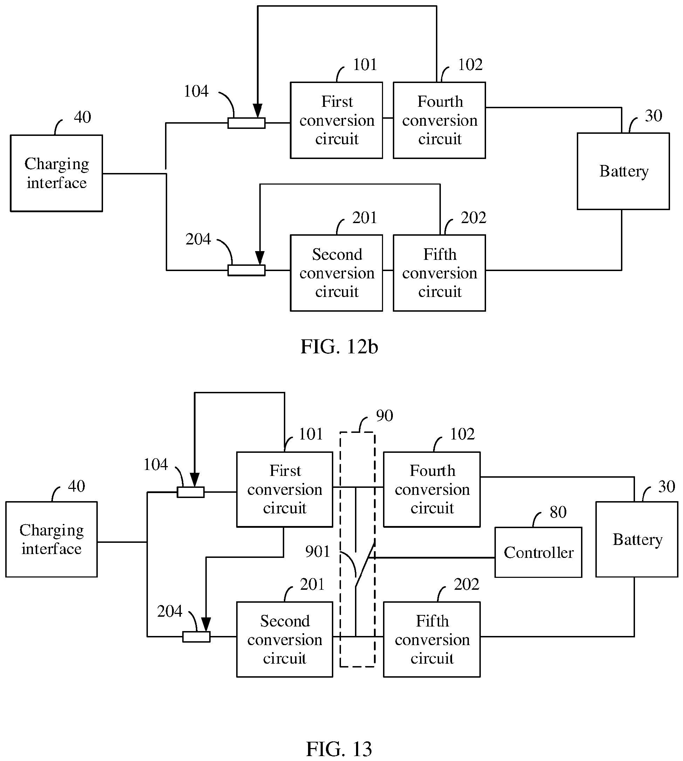

FIG. 12a and FIG. 12b are schematic diagrams of structures of still other charging circuits according to an embodiment of this application. In the charging circuit shown in FIG. 12a, the charging circuit may further include a rheostat 104. The rheostat 104 is connected in series on the first charging path 10. In FIG. 12b, based on the circuit structure shown in FIG. 12a, the charging circuit may further include a rheostat 204 connected in series on the second charging path 20.

In FIG. 12a, for example, a control end of the rheostat 104 is connected to the fourth conversion circuit 102. In FIG. 12b, for example, a control end of the rheostat 204 is connected to the fifth conversion circuit 202. Impedance of the rheostat 104 and impedance of the rheostat 204 are respectively controlled by the fourth conversion circuit 102 and the fifth conversion circuit 202. For example, it is assumed that a ratio of an input current to an output current (current ratio for short below) of the fourth conversion circuit 102 is the same as a current ratio of the fifth conversion circuit 202. In an actual scenario, to ensure charging safety, output currents of the first charging path 10 and the second charging path 20 are usually required to be the same. When the fourth conversion circuit 102 detects that the input current of the fourth conversion circuit 102 is less than an input current of the fifth conversion circuit 202, the fourth conversion circuit 102 controls the rheostat 104 to decrease the impedance until the input current of the fourth conversion circuit 102 is the same as the input current of the fifth conversion circuit 202. When the fourth conversion circuit 102 detects that the input current of the fourth conversion circuit 102 is greater than an input current of the fifth conversion circuit 202, the fourth conversion circuit 102 controls the rheostat 104 to increase the impedance until the input current of the fourth conversion circuit 102 is the same as the input current of the fifth conversion circuit 202. Certainly, this is merely an example for description, but not the unique limitation on this application.

In addition, in some implementations, in this embodiment, the rheostat 104 and the rheostat 204 may be further used as the switch modules in the foregoing embodiment. For example, when the impedance of the rheostat 104 is greater than or equal to a preset threshold, and the current flowing into the fourth conversion circuit 102 is almost zero, the rheostat 104 plays a turning-off function of the switch module. When the impedance of the rheostat 104 is less than the preset threshold, and the current flowing into the fourth conversion circuit 102 is less than a preset current, the rheostat 104 plays a turning-on function of the switch module. Certainly, this is merely an example for description, but not the unique limitation on this application.

The connection manners in FIG. 12a and FIG. 12b are merely example connection manners. Actually, in another implementation, the control ends of the rheostat 104 and the rheostat 204 each may be connected to any conversion circuit.

The impedance of the rheostat is controlled, to flexibly adjust a current on a charging path, so as to meet the current requirements at the different charging stages.

For example, FIG. 13 is a schematic diagram of a structure of still another charging circuit according to an embodiment of this application. As shown in FIG. 13, the charging circuit further includes a connection path 90. In the charging circuit, the control ends of the rheostat 104 and the rheostat 204 are connected to the first conversion circuit 101, and a third switch module 901 is connected in series on the connection path 90. The third switch module 901 may be a MOS transistor or a triode relay having a switch function, and turning-on or turning-off of the third switch module 901 may be controlled by the controller 80.

When the third switch module 901 is turned off, a first charging path formed by connecting the rheostat 104, the first conversion circuit 101, and the fourth conversion circuit 102 in series and a second charging path formed by connecting the rheostat 204, the second conversion circuit 201, and the fifth conversion circuit 202 in series are connected in parallel to charge the battery. If current ratios of the first conversion circuit 101 and the second conversion circuit 201 are the same, and the current ratios of the fourth conversion circuit 102 and the fifth conversion circuit 202 are the same, to ensure charging safety, that is, to ensure that output currents on the first charging path and the second charging path are the same, input currents of the first conversion circuit 101 and the second conversion circuit 201 need to be the same. If the first conversion circuit 101 detects that the input current of the first conversion circuit 101 is greater than the input current of the second conversion circuit 201, the first conversion circuit outputs a first control signal to control the rheostat 104 to increase the impedance, and outputs a second control signal to control the rheostat 204 to reduce the impedance, or controls the impedance of the rheostat 204 to remain unchanged until the input current of the first conversion circuit 101 is equal to the input current of the second conversion circuit 201. When the input current of the first conversion circuit 101 is less than the input current of the second conversion circuit 201, adjustment may be performed with reference to the foregoing adjustment manner. Details are not described again.

When the third switch module 901 is turned on, the first conversion circuit 101 and the second conversion circuit 201 are connected in parallel to form a first parallel circuit, the fourth conversion circuit 102 and the fifth conversion circuit 202 are connected in parallel to form a second parallel circuit, and the first parallel circuit and the second parallel circuit are connected in series through the connection path 90. For a method for controlling the rheostat 104 and the rheostat 204 by the first conversion circuit 101, refer to the case in which the third switch module 901 is turned off. Details are not described herein again.

For example, in a control method for the third switch module 901, when detecting that a current on the connection path 90 is greater than a preset threshold, the controller determines that total heat consumption of the charging circuit is excessively high. In this case, the controller 80 controls the third switch module 901 to be turned off, to reduce heat consumption of each component in the charging circuit, and controls the third switch module 901 to be turned on after charging ends or the third switch module 901 is turned off for preset duration. Certainly, the control method for the third switch module 901 provided in this embodiment is merely an example for description, but not the unique limitation.

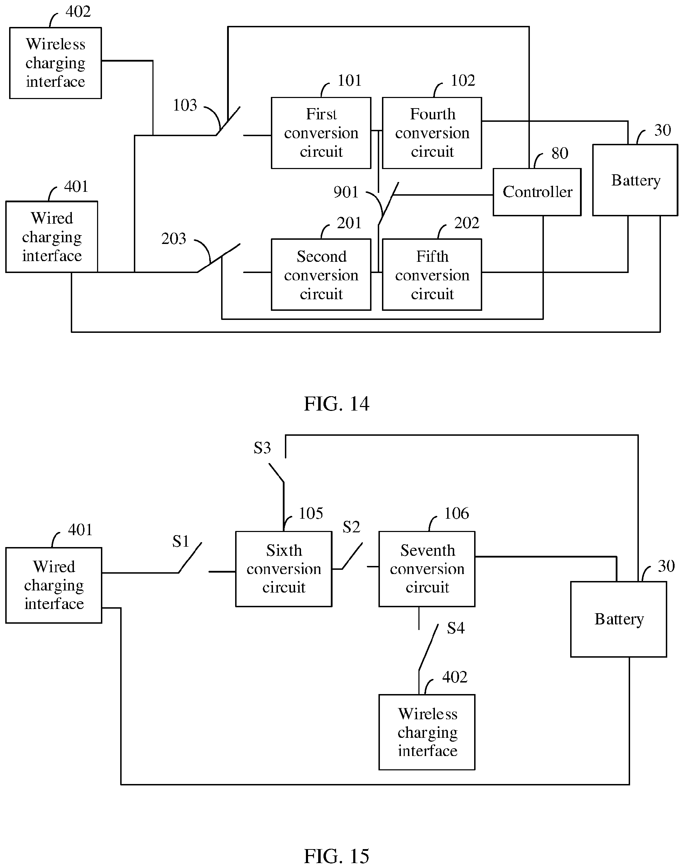

In still another embodiment, the charging interface 40 includes a wired charging interface and/or a wireless charging interface. For example, FIG. 14 is a schematic diagram of a structure of still another charging circuit according to an embodiment of this application. As shown in FIG. 14, in this embodiment, the charging interface 40 specifically includes a wired charging interface 401 and a wireless charging interface 402. Output ends of the wireless charging interface 402 and the wired charging interface 401 are respectively connected to the first switch module 103 and the second switch module 203, and a ground end of the wired charging interface 401 is connected to the battery 30. In a charging scenario, the battery 30 is charged through one of the wired charging interface 401 and the wireless charging interface 402.

FIG. 15 is a schematic diagram of a structure of still another charging circuit according to an embodiment of this application. As shown in FIG. 15, the charging circuit includes a sixth conversion circuit 105 and a seventh conversion circuit 106. An input end of the sixth conversion circuit 105 is connected to the wired charging interface 401 through a switch S1, and an output end of the sixth conversion circuit 105 is connected to an input end of the seventh conversion circuit 106 through a switch S2. An output end of the seventh conversion circuit 106 is connected to the battery 30. Another output end of the sixth conversion circuit 105 is connected to the battery 30 through a switch S3. A power pin connected to the output end of the sixth conversion circuit 105 may be different from or the same as a power pin connected to the seventh conversion circuit 106. Another input end of the seventh conversion circuit 106 is connected to the wireless charging interface 402 through a switch S4. When S1 and S2 are turned on, and S3 and S4 are turned off, a series circuit is formed between the seventh conversion circuit 106 and the sixth conversion circuit 105, and a current output by the wired charging interface 401 flows into the battery through the series circuit between the sixth conversion circuit 105 and the seventh conversion circuit 106. When S1, S3, and S4 are turned on, and S2 is turned off, the current output by the wired charging interface 401 flows through the switch S1, the sixth conversion circuit 105, and the switch S3 and is output to the battery 30, to charge the battery 30, and a current output by the wireless charging interface 402 flows through the switch S4 and the seventh conversion circuit 106 and is output to the battery 30, to charge the battery 30. Therefore, the battery 30 can be charged through the wired charging interface and the wireless charging interface at the same time, to increase a charging speed.

It should be noted herein that, although the foregoing embodiments are all described by using a case in which the charging circuit includes two parallel charging paths, actually, in some implementations, the charging circuit may alternatively include more than two parallel charging paths. For a structure of each charging path and a connection relationship between each charging path and another component in the charging circuit, refer to the first charging path and/or the second charging path. Details are not described herein again.

Still another embodiment of this application further provides a charging chip. The charging chip includes the charging circuit described in any one of the foregoing embodiments.

Still another embodiment of this application further provides an electronic device. The electronic device includes a battery and the foregoing charging chip. For example, the battery may be detachably disposed in the electronic device, and the battery is charged by using the charging chip. To be specific, when an old battery is no longer used, the old battery may be detached, and a new battery is installed in the electronic device.

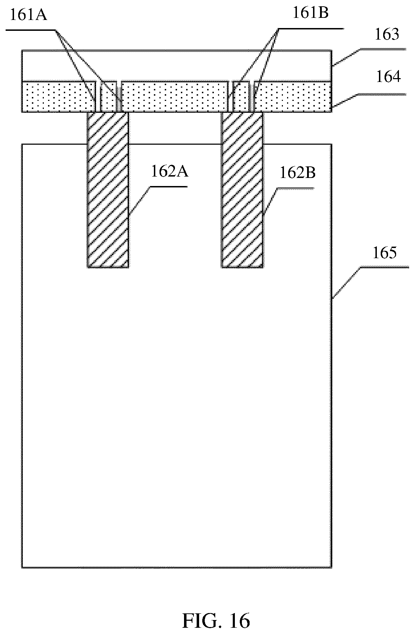

For example, this embodiment provides a charging connection manner between the battery and the charging chip. FIG. 16 is a schematic diagram of a structure of an electronic device according to the embodiment of this application. As shown in FIG. 16, the battery includes a cell 165 and a battery protection board 164. The battery protection board 164 covers an end surface that is provided with an electrode terminal and that is of the cell 165. The electrode terminal includes a positive terminal and a negative terminal. For example, the battery protection board 164 covers an end surface that is provided with a positive terminal 162A and a negative terminal 162B and that is of the cell 165.

The battery protection board 164 is mainly an integrated circuit board that protects a rechargeable battery. Due to material properties and the like, the rechargeable battery cannot be overcharged, overdischarged, shortcircuited, or charged or discharged at an ultra-high temperature or undergo an overcurrent. Therefore, a battery component is always accompanied by a current fuse and a protection board with a sampling resistor. The battery protection board 164 usually includes a control chip, a MOS switch, and the like. The structure of the battery protection board 164 is not particularly limited in this embodiment, provided that the battery protection board 164 can protect the battery.

The battery protection board 164 may be fixedly connected to the cell 165 in a connection manner, for example, welding. A manner in which the battery protection board 164 is fixedly connected to the cell 165 is not particularly limited in this embodiment. A specific structure of the battery protection board 164 and a battery structure, for example, the cell, are not particularly limited herein in this embodiment, provided that the battery can implement charging and discharging.

It can be learned from the foregoing embodiments that the charging circuit disposed in the charging chip in this embodiment of this application includes a plurality of charging paths, and each charging path needs to pass through the battery protection board and be connected to the positive terminal 162A and the negative terminal 162B. In this embodiment, to ensure that positive electrodes of the plurality of charging paths can press against the positive terminal 162A, and negative electrodes of the plurality of charging paths press against the negative terminal 162B, at least a part of the battery protection board is set to be a flexible circuit board in this embodiment. For example, the battery protection board is a flexible circuit board, or a part of the battery protection board is a flexible circuit board.

In still another embodiment, the charging chip is disposed on a first rigid circuit board 163, and openings one-to-one corresponding to the charging paths are disposed on the flexible circuit board. The flexible circuit board is board-to-board (Board to Board, BTB) fastened to the first rigid circuit board 163. A charging terminal corresponding to the charging path penetrates through the corresponding opening and is connected to the electrode terminal. In FIG. 6, for example, the charging circuit includes two charging paths. In this case, positive charging terminals 161A of the two charging paths pass through the openings on the flexible circuit board, and then are connected to the positive terminal 162A of the cell, and negative charging terminals 161B of the two charging paths pass through the openings on the flexible circuit board, and then are connected to the negative terminal 162B of the cell.

The flexible circuit board is BTB fastened to the first rigid circuit board 163. The BTB fastening is implemented by, for example, a pair of plug components (which are respectively referred to as a male connector and a female connector) that can be fastened to each other. The two plug components are respectively connected to the flexible circuit board and the rigid circuit board, and then the two plug components are fastened. In this way, the flexible circuit board can be connected to a line that needs to be connected and that is on the rigid circuit board. In other words, the flexible circuit board is BTB fastened to the rigid circuit board, to connect the flexible circuit board to the line on the rigid circuit board.

For example, the battery protection board further includes a second rigid circuit board, and the battery protection board is formed by splicing the flexible circuit board and the second rigid circuit board. For example, the flexible circuit board and the second rigid circuit board are formed through horizontal splicing. For example, the central part of the battery protection board may be the flexible circuit board, and the flexible circuit board is surrounded by the second rigid circuit board. Alternatively, the flexible circuit board and the second rigid circuit board may be spaced and spliced. A manner of splicing the flexible circuit board and the second hard circuit board is not particularly limited in this embodiment, provided that the opening through which the charging terminal passes through can be disposed on the flexible circuit board and the flexible circuit board can be BTB fastened to the first rigid circuit board.

For example, the electrode terminal may be also referred to as a tab. The tab may be further a rigid tab or a flexible tab. An implementation of the tab is not particularly limited in this embodiment. If the tab is a rigid tab, for example, the tab may be set to be in a bent shape to be used together with the flexible circuit board. If the tab is set to be a flexible tab, the flexible tab may change with flexibility of the flexible circuit board, to ensure normal use of the flexible tab.

The battery protection board is set to be the flexible circuit board. Compared with those in a case in which the battery protection board is set to be a hard rigid circuit, BTB fastening positions do not need to be disposed at a few fixed positions. Instead, any quantity of plug components for BTB fastening may be disposed, and may be disposed at any positions, to implement BTB fastening between the flexible circuit board and the rigid circuit board. In other words, a BTB fastening manner is more flexible and changeable, and is applicable to requirements of a plurality of scenarios. For example, when the plurality of charging paths are disposed, the matched openings may be disposed on the flexible circuit board based on a quantity and positions of the charging paths, without considering BTB fastening positions and quantity. For another example, because the flexible circuit board makes fastening more flexible, when a shape and a position of the battery are set, the disposing position and the shape of the battery may be constructed based on a product shape of the electronic device, without considering a limitation of the battery caused by BTB fastening.

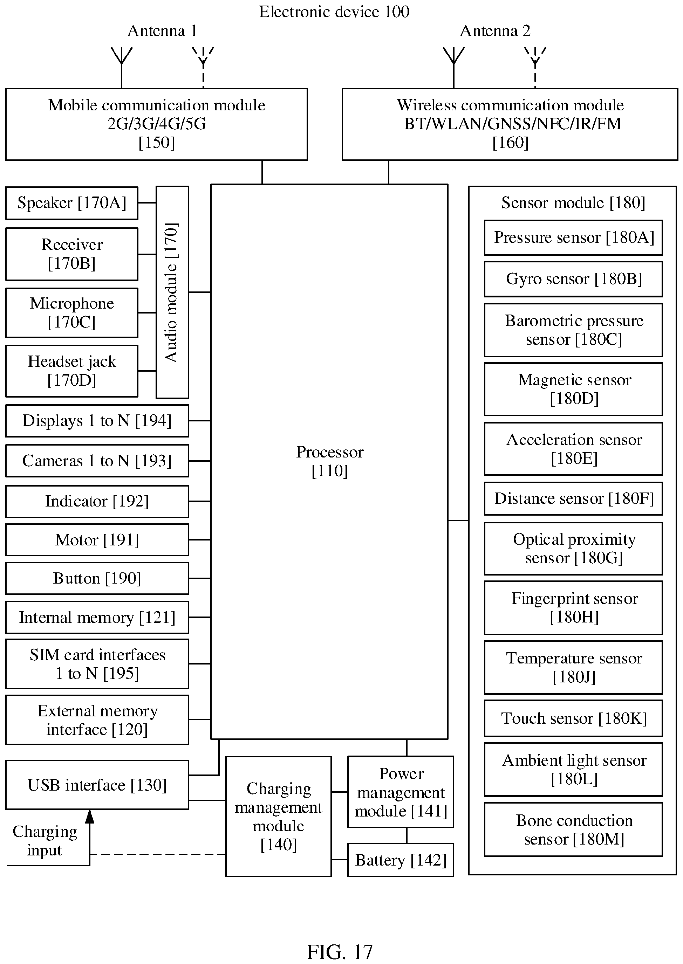

For example, FIG. 17 is a schematic diagram of a structure of an electronic device 100 (for example, a mobile phone).

The electronic device 100 may include a processor 110, an external memory interface 120, an internal memory 121, a universal serial bus (universal serial bus, USB) interface 130, a charging management module 140 (namely, the charging chip described in the foregoing embodiments), a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, a motor 191, an indicator 192, a camera 193, a display 194, a subscriber identity module (subscriber identity module, SIM) card interface 195, and the like. It may be understood that the structure shown in this embodiment constitutes no specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may alternatively include one or more processors 110. The controller may be a nerve center and a command center of the electronic device 100. The controller may generate an operation control signal based on instruction operation code and a time sequence signal, to complete control of instruction fetching and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play audio through the headset.

It may be understood that an interface connection relationship between the modules that is shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless or wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect the battery 142 and the charging management module 140 to the processor 110. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A person skilled in the art can understand that the technologies in this application may be implemented in various apparatuses or devices, including a wireless handset, an integrated circuit (IC), or a group of ICs (for example, a chip set). Various components, modules, or units are described in this application to emphasize functional aspects of apparatuses configured to perform the disclosed technologies, but are not necessarily implemented by using different hardware units. Actually, as described above, various units may be combined into a codec hardware unit in combination with appropriate software and/or firmware, or may be provided by interoperable hardware units (including the one or more processors described above).

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging circuit, comprising:
a first charging path and a second charging path, wherein the first charging path and the second charging path are connected in parallel, and the first charging path and the second charging path are used to receive a charging signal;
the first charging path comprises a first conversion circuit, and the first conversion circuit is configured to convert the charging signal on the first charging path;
the second charging path comprises a second conversion circuit, and the second conversion circuit is configured to convert the charging signal on the second charging path;
the first charging path is connected to a first end of a battery; and
the second charging path is connected to a second end of the battery, and the first end of the battery is different from the second end of the battery.

2. The charging circuit according to claim 1, wherein the charging circuit further comprises a third conversion circuit;
a first end of the third conversion circuit is connected to a charging interface, and is configured to receive a charging input signal; and
a second end of the third conversion circuit is connected to the first charging path and the second charging path.

3. The charging circuit according to claim 2, wherein the charging circuit further comprises:
a rheostat, wherein
the rheostat is connected in series between the third conversion circuit and the charging interface, the rheostat is further configured to receive a first control signal of the third conversion circuit, and the first control signal is used to adjust impedance of the rheostat.

4. The charging circuit according to claim 1, wherein
the first charging path further comprises a fourth conversion circuit, and the fourth conversion circuit is connected in series to the first conversion circuit; and
the second charging path further comprises a fifth conversion circuit, and the fifth conversion circuit is connected in series to the second conversion circuit.

5. The charging circuit according to claim 4, wherein the charging circuit further comprises a controller;
the first charging path further comprises a first switch module, and the first switch module is connected in series to the first conversion circuit and the fourth conversion circuit;
the first switch module is connected to the controller; and
the controller is configured to control turning-on or turning-off of the switch module.

6. The charging circuit according to claim 4, wherein the charging circuit further comprises a rheostat, and the rheostat is connected in series to the first charging path, or the rheostat is connected in series to the second charging path.

7. The charging circuit according to claim 6, wherein the second charging path further comprises a second switch module, the second switch module is connected in series to the second conversion circuit and the fifth conversion circuit, and the second switch module is connected to a charging interface.

8. The charging circuit according to any one of claims 4 to 7, wherein a path between the first conversion circuit and the fourth conversion circuit and a path between the second conversion circuit and the fifth conversion circuit are connected through a connection path.

9. The charging circuit according to claim 8, wherein the charging circuit comprises a third switch module, and the third switch module is connected in series on the connection path.

10. The charging circuit according to claim 9, wherein at least one of the following circuits is a switched-capacitor circuit: the first conversion circuit, the second conversion circuit, a third conversion circuit, the fourth conversion circuit, and the fifth conversion circuit.

11. The charging circuit according to claim 10, wherein a ratio of an input voltage to an output voltage of the switched-capacitor circuit is 4:1 or 2:1.

12. The charging circuit according to claim 9, wherein at least one of the following switch modules is a MOS transistor or a triode relay: the third switch module, the second switch module, and the first switch module.

13. The charging circuit according to claim 1, wherein the charging interface comprises a wired charging interface and/or a wireless charging interface.

14. A charging chip, comprising the charging circuit according to any one of claims 1 to 13.

15. An electronic device, comprising a battery and the charging chip according to claim 14.

16. The electronic device according to claim 15, wherein the battery comprises a cell and a battery protection board, the battery protection board covers an end surface that is provided with an electrode terminal and that is of the cell, and at least a part of the battery protection board is a flexible circuit board.

17. The electronic device according to claim 16, wherein the charging chip is disposed on a first rigid circuit board, and openings one-to-one corresponding to charging paths are disposed on the flexible circuit board; and
the flexible circuit board is BTB fastened to the first rigid circuit board, and a charging terminal corresponding to the charging path penetrates through the corresponding opening and presses against the electrode terminal.

18. The electronic device according to claim 16 or 17, wherein the circuit protection board further comprises a second rigid circuit board, and the battery protection board is formed by splicing the flexible circuit board and the second rigid circuit board.
